# FASCICULE DE BREVET EUROPEEN

(11) **EP 3 160 812 B1**
(45) Date de publication et mention de la délivrance du brevet: **18.03.2020**
(21) Numéro de dépôt: 15733788.2
(22) Date de dépôt: 03.06.2015
(51) Int. Cl.: B60W 30/17, B60W 10/04, B60W 10/184

(54) **PROCEDE DE REGULATION AUTOMATIQUE D'UNE VITESSE D'UN VEHICULE CIRCULANT A BASSE VITESSE**
VERFAHREN ZUM AUTOMATISCHEN REGELN DER GESCHWINDIGKEIT EINES LANGSAM FAHRENDEN FAHRZEUGS
METHOD FOR AUTOMATICALLY REGULATING THE SPEED OF A VEHICLE TRAVELLING AT LOW SPEED

(30) Priorité: 25.06.2014 FR 1455874
(43) Date de publication de la demande: 03.05.2017
(73) Titulaire: Renault S.A.S., 92100 Boulogne-Billancourt (FR)
(72) Inventeur: MINOIU-ENACHE, Nicoleta, F-78000 Versailles (FR); ILLOULA, Nassim, F-94140 Alfortville (FR)
(86) Numéro de dépôt international: PCT/FR2015/051464
(87) Numéro de publication internationale: WO 2015/197932

(56) Documents cités:
- FR-A1- 2 899 190
- US-A1- 2004 215 385
- US-A1- 2005 131 587

## Description

La présente invention concerne un procédé de régulation automatique d'une vitesse d'un véhicule circulant à basse vitesse et un système pour la mise en œuvre d'un tel procédé.

L'invention concerne en particulier la régulation automatique de la vitesse du véhicule visant à contrôler le déplacement longitudinal de ce dernier à de basses vitesses, c'est-à-dire à des vitesses inférieures à 3m/s (10 km/h).

L'invention concerne également un véhicule circulant à basse vitesse comprenant un tel système de régulation automatique de vitesse.

Dans l'état de l'art on connait différents procédés de régulation de la vitesse d'un véhicule circulant à basse vitesse qui sont fréquemment mis en œuvre dans des systèmes d'assistance à la conduite pour une circulation d'un véhicule dans des embouteillages.

De tels procédés sont par exemple prévus pour réguler la vitesse du véhicule en fonction d'une vitesse de consigne fixe lors de son déplacement dans l'embouteillage. La vitesse du véhicule est ensuite modulée jusqu'à l'arrêt du véhicule par l'activation d'une pédale de frein par un conducteur.

Cependant, un des inconvénients majeur de ces procédés est lié au fait qu'ils ne sont pas prévus pour assurer une régulation de la vitesse du véhicule à basse vitesse dans différentes situations de conduite qui peuvent se poser lors de son déplacement sur une voie de circulation.

Le document US2004/215385A1 divulgue un procédé de régulation automatique d'une vitesse d'un véhicule circulant à basse vitesse, notamment à une vitesse de rampage, en fonction d'une vitesse de consigne comprenant une étape de freinage et/ou une étape d'accélération du véhicule.

Pour réaliser une telle régulation de la vitesse, les procédés de l'état de l'art mettent généralement en œuvre un mécanisme de contrôle de la régulation de la vitesse du véhicule en boucle fermée, par exemple à partir de régulateurs PID, afin de corriger d'éventuelles erreurs détectées entre une vitesse mesurée du véhicule et une vitesse de consigne à suivre. Lorsque de telles erreurs requièrent des corrections minimes, ce qui est souvent le cas pour des véhicules circulant à de basses vitesses, celles-ci ne peuvent être réalisées du fait de la capacité limitée des actionneurs de couples de freinage ou d'accélération qui ne sont pas prévus pour effectuer d'aussi fines corrections.

La présente invention a pour objet de remédier en tout ou partie aux différents inconvénients cités précédemment.

Dans ce dessein, l'invention concerne un procédé de régulation automatique d'une vitesse d'un véhicule circulant à basse vitesse en fonction d'une vitesse de consigne comprenant une étape de freinage et/ou une étape d'accélération du véhicule, l'étape de freinage comprenant une sous-étape de détermination d'un état de déplacement du véhicule à partir de la vitesse de consigne et d'une sous-étape de génération d'un couple de freinage en fonction de l'état de déplacement déterminé du véhicule.

Dans d'autres modes de réalisation :
- le procédé comprend une étape de calcul d'un couple longitudinal à partir de la vitesse de consigne et d'une vitesse mesurée du véhicule ;
- le couple longitudinal calculé est :
   - positif alors l'étape d'accélération comprend une sous-étape de génération d'un couple d'accélération correspondant au couple longitudinal calculé ;
   - négatif alors l'étape de freinage comprend la sous-étape de génération du couple de freinage en fonction de l'état de déplacement déterminé du véhicule ;
- l'état de déplacement du véhicule est :
   - un arrêt ;
   - un démarrage en cours ;
   - un roulage de croisière, et/ou
   - un arrêt en cours ;
- la sous-étape de détermination de l'état de déplacement du véhicule comprend une étape d'évaluation de la croissance/décroissance de la vitesse de consigne sur une période ;
- lorsque la vitesse de consigne est croissante et qu'elle est sensiblement supérieure à :
   - un deuxième seuil de vitesse et qu'un couple moteur mesuré du véhicule est sensiblement supérieur à un couple moteur seuil, alors l'état de déplacement du véhicule correspond à un démarrage en cours ;
   - un quatrième seuil de vitesse alors l'état de déplacement du véhicule correspond à un roulage de croisière, et
- lorsqu'une vitesse de consigne est décroissante et qu'elle est sensiblement inférieure à :
   - un premier seuil de vitesse alors l'état de déplacement du véhicule correspond à un arrêt du véhicule ;
   - un troisième seuil de vitesse alors l'état de déplacement du véhicule correspond à un arrêt en cours du véhicule.

L'invention concerne aussi un programme d'ordinateur comprenant des instructions de code de programme pour l'exécution de telles étapes du procédé lorsque ledit programme est exécuté par un ordinateur.

L'invention concerne également un système de régulation automatique d'une vitesse d'un véhicule circulant à basse vitesse, pour la mise en œuvre d'un tel procédé, comprenant :
- une unité de traitement ;
- une première unité de commande électronique apte à gérer un freinage du véhicule ;
- une deuxième unité de commande électronique apte à gérer une accélération du véhicule ; et
- une troisième unité de commande électronique apte à générer au moins une vitesse de consigne,
ladite unité de traitement étant reliée aux première, deuxième et troisième unités de commande électronique et comprend des éléments de mémoire comportant un tel programme d'ordinateur exécutable par ladite unité de traitement.

L'invention concerne aussi un véhicule circulant à basse vitesse comprenant le système de régulation automatique d'une vitesse.

Avantageusement, le véhicule est apte à se déplacer en mode autonome.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une représentation schématique d'un véhicule comprenant un système de régulation automatique de la vitesse d'un véhicule circulant à basse vitesse selon le mode de réalisation de l'invention ;
- les figures 2 et 3 sont des schémas-blocs relatifs à un procédé de régulation automatique d'une vitesse d'un véhicule circulant à basse vitesse selon le mode de réalisation de l'invention ;
- les figures 4 et 5 illustrent une sous-étape d'une étape de freinage du procédé relative à la détermination des états de déplacement du véhicule selon le mode de réalisation de l'invention ;
- la figure 6 illustre une courbe représentant une vitesse du véhicule par rapport à un couple de freinage selon le mode réalisation de l'invention, et
- la figure 7 est une vue schématique des passages entre les différents états de déplacement du véhicule.

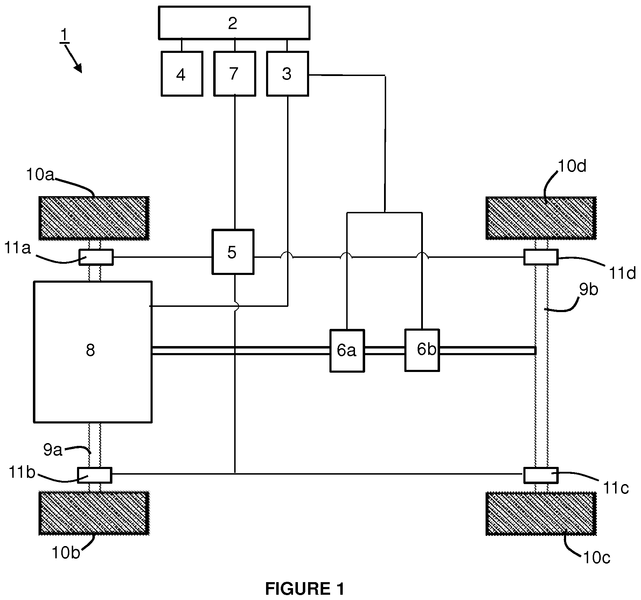

Sur la figure 1 est représenté un véhicule 1 pourvu du système de régulation automatique de vitesse selon le mode de réalisation de l'invention.

Ce véhicule 1 peut être un véhicule automobile comprenant un groupe motopropulseur 8 comportant un moteur de type thermique, électrique ou encore hybride. Ce véhicule 1 peut être équipé d'une boîte de vitesse automatique (non représentée) lorsque le moteur est de type thermique ou hybride.

Le véhicule 1 comporte des trains avant 9a et arrière 9b pourvus chacun de deux roues 10a, 10b, 10c et 10d. Le groupe motopropulseur 8 de ce véhicule 1 est apte à exercer un couple d'accélération au niveau des roues 10a, 10b, 10c, 10d, motrices du véhicule 1.

Ce véhicule 1 comprend également un dispositif de freinage hydraulique comportant par exemple deux circuits de freinage prévus chacun pour deux roues 10a, 10b, 10c et 10d dont les freins sont reliés entre eux. Le dispositif de freinage comporte également des modules de frein 11a, 11b, 11c, 11d pour transformer la pression hydraulique en couple de freinage C_{f1}, C_{f2}, C_{f3}, C_{f4} de chacune des roues 10a, 10b, 10c, 10d, et un dispositif de régulation 5 du freinage qui permet de modifier ce couple de freinage exercé par chaque module de frein 11a, 11b, 11c, 11d sur une roue 10a, 10b, 10c, 10d, en l'augmentant/diminuant.

Le système de régulation automatique de la vitesse comprend une unité de traitement 2 reliée de manière non limitative et non exhaustive à :
- une première unité de commande électronique 7 apte à gérer le freinage du véhicule,
- une deuxième unité de commande électronique 3 apte à gérer l'accélération du véhicule, et
- une troisième unité de commande électronique 4 apte à générer au moins une vitesse de consigne Vc.

La première unité de commande électronique 7 est susceptible de piloter le dispositif de régulation 5 du freinage et en particulier les éléments le constituant. Le dispositif de régulation 5 du freinage est utilisé de manière conjointe avec chaque module de frein 11a, 11b, 11c, 11d du dispositif de freinage hydraulique pour agir sur le couple de freinage de chacune des roues 10a, 10b, 10c, 10d.

On notera que ce dispositif de régulation 5 du freinage peut être une composante :
- d'un système électronique de contrôle de stabilité du véhicule, plus généralement connu sous l'acronyme ESC pour « Electronic Stability Control », dont l'objectif est d'appliquer de façon indépendante à chaque roue 10a, 10b, 10c, 10d du véhicule 1 un couple correcteur de freinage afin de contrôler la stabilité et la trajectoire du véhicule, et/ou
- d'un système UBP pour « Uncoupled Braking Pedal » si le groupe motopropulseur 8 du véhicule 1 comprend un moteur électrique ou hybride permettant de répartir le couple de freinage entre le dispositif de freinage hydraulique et un dispositif de freinage récupératif (non représenté).

La deuxième unité de commande électronique 3 est apte à contrôler le groupe motopropulseur 8. Cette deuxième unité de commande électronique 3 comprend une électronique de contrôle évoluée permettant notamment d'assurer la gestion du groupe motopropulseur 8. Cette deuxième unité de commande électronique 3 peut être reliée de manière non limitative et non exhaustive à :
- un module de détermination de la vitesse 6a du véhicule 1 pouvant comprendre au moins un capteur de vitesse des roues 10a, 10b, 10c, 10d motrices du véhicule 1 et/ou un capteur de rotation de vitesse du groupe motopropulseur 8, et/ou
- un module de mesure d'un couple du moteur 6b.

La troisième unité de commande électronique 4 est mise en œuvre dans le cadre de domaines d'application de l'invention comme par exemple ceux qui sont relatifs à la mise en œuvre d'un mode autonome du véhicule 1. La troisième unité de commande électronique 4 est reliée à l'unité de traitement 2 et est apte à lui fournir des vitesses de consigne Vc dans le cadre du fonctionnement de ces domaines d'application.

Le véhicule 1 peut en effet être un véhicule autonome c'est-à-dire un véhicule 1 qui est apte à se déplacer dans un mode autonome. Ce mode de commande autonome, c'est-à-dire sans chauffeur, est utile pour la réalisation de nombreux services, par exemple pour un service de parking automatisé, un service voiturier (déplacement autonome du véhicule 1 vers une place de parking), service de recharge automatique (déplacement autonome du véhicule vers une borne de recharge), service de déplacement sans conducteur de personnes à mobilité réduite, service de rééquilibrage de flottes de véhicules par la mise en peloton, ou encore un service de gestion du déplacement du véhicule 1 dans le trafic notamment dans les embouteillages.

Pour ce faire, le véhicule 1 peut être équipé de capteurs numériques de types caméras, radars, sonars, lidars qui sont aptes à être reliés à la troisième unité de commande électronique 4.

Cette troisième unité de commande électronique 4 est apte à traiter les données provenant de ces capteurs et à contrôler le déplacement longitudinal du véhicule 1 en coopérant avec l'unité de traitement 2. Cette troisième unité de commande électronique 4 est en effet capable de déterminer par exemple une trajectoire globale qui définit le déplacement, notamment longitudinal, du véhicule entre un point de départ et un point d'arrivée. Dans le cadre du suivi de cette trajectoire, il transmet à l'unité de traitement 2 de manière successive des vitesses de consignes Vc pour la mise en œuvre de la régulation automatique de la vitesse du véhicule 1.

Les première, deuxième et troisième unités de commande électronique 7, 3, 4 sont aptes à échanger des informations avec l'unité de traitement 2 du système de régulation automatique de la vitesse. De plus, elles comportent chacune de ressources matérielles et logicielles plus précisément au moins un processeur coopérant avec des éléments de mémoire.

L'unité de traitement 2 comprend au moins une unité de calcul comportant des ressources matérielles et logicielles plus précisément au moins un processeur coopérant avec des éléments de mémoire. Cette unité de calcul est apte à exécuter des instructions pour la mise en œuvre d'un programme d'ordinateur.

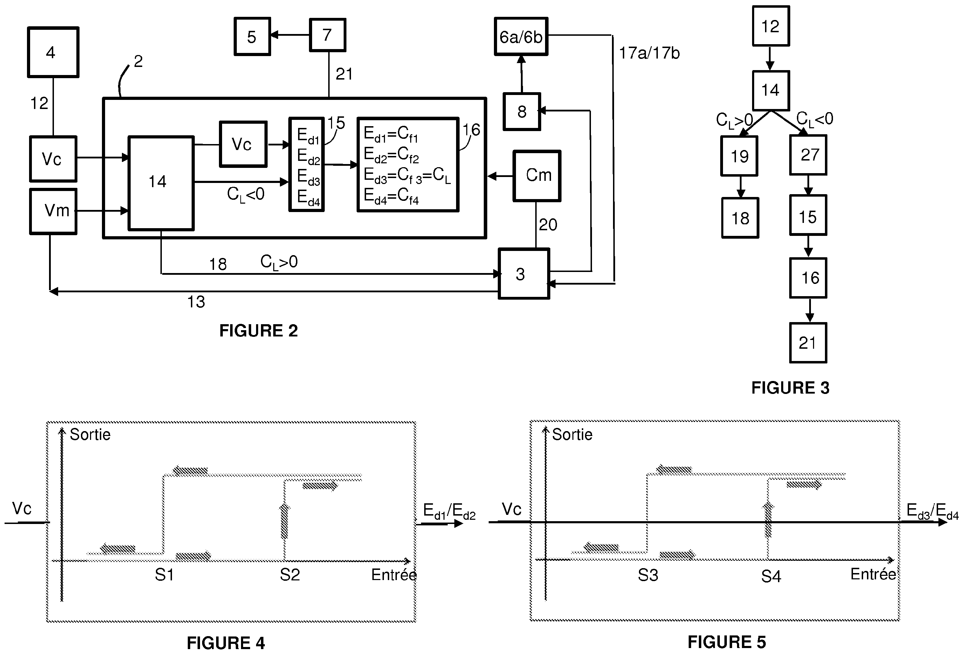

Le système de régulation automatique de la vitesse du véhicule 1 est apte à mettre en œuvre un procédé de régulation automatique de la vitesse dont le principe est décrit par les schémas-blocs représentés sur les figures 2 et 3.

Le procédé de régulation automatique de la vitesse du véhicule 1 circulant à basse vitesse est réalisé en fonction de la vitesse de consigne Vc délivrée par la troisième unité de commande électronique 4. Le procédé comprend une étape de freinage 27 et/ou une étape d'accélération 19 du véhicule. En fonction d'un état de déplacement E_{d1}, E_{d2}, E_{d3}, E_{d4} du véhicule 1 le procédé ne peut mettre en œuvre que l'étape de freinage 27 ou que l'étape d'accélération 19 ou encore les étapes de freinage 27 et d'accélération 19 de manière simultanée.

Ce procédé comprend une étape préliminaire de réception 12 par l'unité de traitement 2 de la vitesse de consigne Vc provenant de la troisième unité de commande électronique 4.

A réception 12 de cette vitesse de consigne Vc, l'unité de traitement 2 est apte transmettre une requête à la deuxième unité de commande électronique 3 visant à obtenir une vitesse mesurée Vm du véhicule. La deuxième unité de commande 3 transmet 13 alors à l'unité de traitement 2 cette vitesse mesurée Vm qu'elle reçoit 17a du module de détermination de la vitesse 6a du véhicule 1.

Le procédé prévoit ensuite une étape de calcul 14 d'un couple longitudinal C_{L}. Cette étape 14 est mise en œuvre par l'unité de calcul de l'unité de traitement 2 à partir de ses ressources matérielles et logicielles et des vitesses de consigne Vc et mesurée Vm. Cette unité de calcul est apte à effectuer des opérations visant à obtenir ce couple longitudinal C_{L}.

Pour déterminer ce couple longitudinal C_{L}, l'unité de calcul met en œuvre un programme informatique relatif à un algorithme que nous ne décrirons pas ici car bien connu de l'état de l'art et exposé par exemple dans les documents US2011/0066350 et EP1940 665.

Si le couple longitudinal C_{L} calculé par l'unité de traitement 2 est positif, il correspond alors à un couple d'accélération. L'unité de traitement 2 transmet 18 alors une requête à la deuxième unité de commande électronique 3 qui contrôle le groupe motopropulseur 8 afin que ce dernier exerce un couple d'accélération des roues 10a, 10b, 10c, 10d motrices du véhicule 1.

A l'inverse, lorsque ce couple longitudinal C_{L} est négatif, le couple qui doit être appliqué au véhicule 1 est alors un couple de freinage C_{f1}, C_{f2}, C_{f3}, C_{f4}. L'unité de traitement 2 va alors, lors de l'étape de freinage 27 du procédé, générer un couple de freinage C_{f1}, C_{f2}, C_{f3}, C_{f4} à appliquer au véhicule 1 qui est fonction de l'état de déplacement E_{d1}, E_{d2}, E_{d3}, E_{d4} du véhicule 1. Ce couple de freinage C_{f1}, C_{f2}, C_{f3}, C_{f4} est alors transmis 21 à la première unité de commande électronique 7 qui contrôle le dispositif de régulation 5 du freinage qui est apte à modifier le couple de freinage C_{f1}, C_{f2}, C_{f3}, C_{f4} exercé par chaque module de frein 11a, 11b, 11c, 11d sur une roue 10a, 10b, 10c, 10d, en l'augmentant/diminuant.

Pour ce faire, l'étape de freinage 27 du procédé comprend une sous-étape de détermination 15 de l'état de déplacement E_{d1}, E_{d2}, E_{d3}, E_{d4} du véhicule 1. Cette sous-étape 15 du procédé est apte à évaluer de manière non limitative et non exhaustive les états de déplacement suivants du véhicule 1 :
- un arrêt E_{d1} du véhicule 1, qui correspond à l'état de déplacement où la gestion de la phase du démarrage de ce dernier n'a pas commencée ;
- démarrage E_{d2} en cours du véhicule 1, qui correspond à l'état de déplacement qui survient après un arrêt du véhicule 1 et lors duquel la vitesse de ce dernier augmente ;
- arrêt en cours E_{d4} du véhicule 1, qui correspond à l'état du déplacement où la vitesse du véhicule 1 diminue jusqu'à devenir sensiblement nulle ;
- roulage E_{d3} de croisière du véhicule, qui est relatif à l'état de déplacement où la vitesse du véhicule 1 ne correspond pas à des vitesses comprises dans les phases d'arrêt et/ou de démarrage de ce dernier.

Dans le cadre de cette sous-étape de détermination 15 de l'état de déplacement du véhicule 1, le procédé prévoit une étape d'évaluation de la croissance/décroissance de la vitesse de consigne Vc sur une période d.

Plus précisément, l'unité de calcul de l'unité de traitement 2 réalise une comparaison entre les différentes vitesses de consigne Vc reçues à des instants t différents durant la période d qui est configurable. Si durant cette période d, les différentes vitesses de consigne Vc successives reçues augmentent alors l'unité de calcul détermine que la dernière vitesse de consigne Vc reçue est croissante. A l'inverse si durant cette période d, les différentes vitesses de consigne Vc successives reçues diminuent alors l'unité de traitement 2 détermine alors que la dernière vitesse de consigne Vc reçue est décroissante.

Dans le cadre de la réalisation de cette sous-étape de détermination 15, des seuils de vitesses S1, S2, S3, S4 et un couple moteur S5 sont définis afin de contribuer à l'évaluation de l'état de déplacement E_{d1}, E_{d2}, E_{d3}, E_{d4} du véhicule 1. Ces seuils de vitesse S1, S2, S3, S4 et de couple moteur S5 correspondent à des paramètres de calibration qui sont définis en fonction des caractéristiques du véhicule 1, notamment des caractéristiques relatives à la puissance du groupe motopropulseur 8 et/ou à l'inertie de ce groupe motopropulseur 8 et/ou à l'inertie du véhicule 1.

Ces seuils de vitesse S1, S2, S3, S4 et de couple moteur S5 peuvent avoir de manière non limitative et non exhaustive les valeurs suivantes qui sont communes à un grand nombre de véhicules présentant des caractéristiques différentes :
- le premier seuil de vitesse S1 est compris entre 0,1 et 0,3 km/h, et est de préférence de 0,2 km/h
- le deuxième seuil de vitesse S2 est compris entre 0,3 et 0,5 km/h, et est de préférence de 0,4 km/h ;
- le troisième seuil de vitesse S3 est compris entre 1 et 3 km/h, et est de préférence de 2 km/h ;
- le quatrième seuil de vitesse S4 est compris entre 2 et 4 km/h, et est de préférence de 3 km/h ;
- le seuil de couple moteur S5 est compris entre 70 et 90 Nm, et est de préférence de 80 Nm.

On remarquera que les valeurs de ces seuils de vitesse S1 à S4 et de couple moteur S5 sont extrêmement faibles. De plus, les première, deuxième, troisième et quatrième seuils de vitesse sont énoncés ici par ordre croissant de grandeur, autrement dit : S1 < S2< S3 < S4.

Ainsi que l'illustre les figures 4 et 5, la sous-étape de détermination 15 permet à partir de la vitesse de consigne Vc fournie en entrée à l'unité de calcul de l'unité de traitement 2 de déterminer en sortie de cette unité de calcul l'état de déplacement E_{d1}, E_{d2}, E_{d3}, E_{d4} du véhicule 1. Effectivement, l'évaluation de l'état de déplacement E_{d1}, E_{d2}, E_{d3}, E_{d4} du véhicule 1 est réalisée en fonction de la vitesse de consigne Vc qui peut être croissante ou décroissante (sens des flèches sur les figures 4 et 5) et de la comparaison de cette vitesse de consigne Vc avec les seuils de vitesse S1, S2 (visibles sur la figure 4) et S3, S4 (visibles sur la figure 5).

Plus précisément, lorsque la vitesse de consigne Vc est décroissante et qu'elle est sensiblement inférieure au premier seuil de vitesse S1 alors l'état de déplacement E_{d1}, E_{d2}, E_{d3}, E_{d4} du véhicule 1 correspond à l'arrêt E_{d1} du véhicule 1.

Lorsque que cette vitesse de consigne Vc est croissante et qu'elle est sensiblement supérieure au deuxième seuil de vitesse S2 et qu'un couple moteur Cm mesuré du véhicule 1 est sensiblement supérieur au seuil de couple moteur S5, alors l'état de déplacement E_{d1}, E_{d2}, E_{d3}, E_{d4} du véhicule 1 correspond au démarrage E_{d2} en cours du véhicule 1. La mesure du couple moteur Cm du véhicule 1 est réalisée par le module de mesure du couple moteur 6b du véhicule 1 qui est apte à transmettre 17b cette mesure à la deuxième unité de commande électronique 3. Ce couple moteur Cm mesuré est transmis 20 à l'unité de traitement 2 par la deuxième unité de commande électronique 3 suite à la réception par cette dernière d'une requête de l'unité de traitement 2.

Partant de l'état de déplacement E_{d2}, lorsque la vitesse de consigne Vc est décroissante et qu'elle est sensiblement inférieure au premier seuil S1 de vitesse alors l'état de déplacement E_{d1}, E_{d2}, E_{d3}, E_{d4} du véhicule 1 correspond à l'arrêt en cours E_{d4} du véhicule.

Partant de l'état de déplacement E_{d2}, lorsque la vitesse de consigne Vc est croissante et qu'elle est sensiblement supérieure au quatrième seuil S4 de vitesse alors l'état de déplacement E_{d1}, E_{d2}, E_{d3}, E_{d4} du véhicule 1 correspond au roulage de croisière E_{d3}.

Partant de l'état de déplacement E_{d3}, lorsque la vitesse de consigne Vc est décroissante et qu'elle est sensiblement inférieure au troisième seuil S3 de vitesse alors l'état de déplacement E_{d1}, E_{d2}, E_{d3}, E_{d4} du véhicule 1 correspond à l'arrêt en cours E_{d4} du véhicule.

Partant de l'état de déplacement E_{d4}, lorsque la vitesse de consigne Vc est à nouveau croissante et qu'elle est sensiblement supérieure au deuxième seuil S2 de vitesse et qu'un couple moteur Cm mesuré du véhicule 1 est sensiblement supérieur au seuil de couple moteur S5 alors l'état de déplacement E_{d1}, E_{d2}, E_{d3}, E_{d4} du véhicule 1 correspond à nouveau au démarrage E_{d2} en cours du véhicule 1.

Dès lors que l'état de déplacement du véhicule 1 est déterminé, l'étape de freinage 27 du procédé prévoit la réalisation de la sous-étape de génération 16 du couple de freinage C_{f1}, C_{f2}, C_{f3}, C_{f4}, relatif à l'état de déplacement E_{d1}, E_{d2}, E_{d3}, E_{d4} déterminé du véhicule 1.

Plus précisément, lorsque l'état de déplacement E_{d1}, E_{d2}, E_{d3}, E_{d4} déterminé correspond à l'arrêt E_{d1} du véhicule c'est-à-dire que la vitesse de consigne Vc du véhicule est inférieure au premier seuil de vitesse S1, le couple de freinage C_{f1} généré par l'unité de traitement 2 est un couple qui est apte à maintenir le véhicule 1 à l'arrêt quel que soit l'inclinaison de la voie de circulation où est situé le véhicule 1.

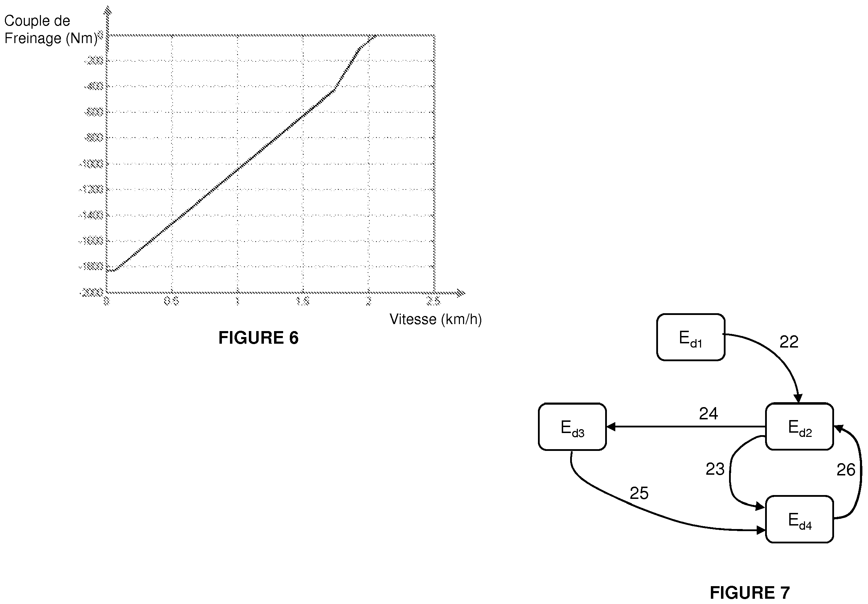

Quand l'état de déplacement correspond au démarrage E_{d2} ou à l'arrêt en cours E_{d4} du véhicule, les couples de freinage respectifs C_{f2} et C_{f4} générés par l'unité de traitement 2 sont déterminés à partir de données archivées dans les éléments de mémoire de l'unité de traitement 2. Ces données correspondent à des couples de freinage à appliquer au véhicule en fonction de la vitesse de consigne Vc durant la phase de démarrage ou d'arrêt du véhicule 1. Ces données sont visibles sur le graphe représenté sur la figure 6.

Alternativement dans le cadre de la détermination des couples de freinage Cf₂ et Cf₄, ces couples de freinage Cf₂ et Cf₄ peuvent également correspondre au couple de freinage pour la vitesse de consigne Vc qui a la valeur la plus élevée entre le couple déterminée à partir des données archivées et le couple longitudinale C_{L} calculé.

Lorsque l'état de déplacement correspond au roulage de croisière E_{d3} du véhicule 1, le couple de freinage C_{f3} généré par l'unité de traitement 2 correspond au couple longitudinal C_{L} négatif qui a été calculé par l'unité de traitement 2 lors de l'étape calcul 14.

A la figure 7 est illustrée un exemple de mis en œuvre de la sous-étape de détermination 15 de l'état du déplacement E_{d1}, E_{d2}, E_{d3}, E_{d4} du véhicule 1 du procédé de régulation automatique de la vitesse du véhicule 1.

Lors de la mise en route du véhicule 1, le système de régulation automatique de la vitesse est activé. Le véhicule 1 passe de l'état de déplacement où il est à l'arrêt E_{d1} à l'état de déplacement correspondant au démarrage en cours E_{d2} de ce dernier. Le passage 22 de l'état de déplacement d'arrêt E_{d1} à l'état de déplacement du démarrage en cours Ed₂ est réalisé sous les conditions suivantes que la vitesse de consigne Vc est croissante et est comprise entre les deuxième et troisième seuils de vitesse S2 et S3, et que le couple moteur mesuré Cm du véhicule est sensiblement supérieur au seuil de couple moteur S5. Autrement dit, lorsque la vitesse de consigne Vc commence à augmenter la phase de démarrage débute. Lors de ce passage 22, le couple de freinage C_{f1} qui maintient le véhicule à l'arrêt est alors réduit proportionnellement par rapport à l'accélération du véhicule 1.

Le véhicule 1 peut par la suite être amené à passer de l'état de déplacement relatif au démarrage en cours Ed₂ à :
- l'état de déplacement correspondant à l'arrêt en cours Ed₄, lors d'un passage 23 qui est réalisé lorsqu'un arrêt est finalement décidé sous la condition que la vitesse de consigne Vc est maintenant décroissante et inférieure au premier seuil de vitesse S1 et par conséquence aussi au troisième seuil de vitesse S3. Lors de ce passage 23 le couple de freinage Cf₂ qui est appliqué au véhicule augmente jusqu'à l'arrêt du véhicule 1.
- - l'état de déplacement correspondant au roulage de croisière E_{d3}, lors d'un passage 24 qui est réalisé lorsque la vitesse de consigne Vc est croissante et a suffisamment augmentée pour considérer que la phase de démarrage du véhicule 1 est terminée c'est-à-dire-que cette vitesse de consigne Vc est supérieure au quatrième seuil de vitesse S4 et donc supérieure au deuxième seuil S2. Lors de ce passage 24, le couple de freinage Cf₂ est diminué jusqu'à être nul en fonction de la vitesse de consigne Vc, plus précisément jusqu'à ce que la vitesse de consigne Vc soit sensiblement égale au troisième seuil de vitesse S3, c'est-à-dire bien avant que la vitesse de consigne Vc ne soit supérieure au quatrième seuil de vitesse V4. Cette diminution du couple de freinage Cf₂ est définie à partir des données (visibles sur le graphe représenté sur la figure 6) archivées dans les éléments de mémoire de l'unité de traitement 2 qui sont relatives à des couples de freinage à appliquer au véhicule en fonction de la vitesse de consigne Vc.

Le véhicule 1 peut ensuite réaliser un passage 25 de l'état de déplacement relatif au roulage de croisière Ed₃ à l'état de déplacement correspondant à l'arrêt en cours Ed₄. Lors de ce passage 25, la vitesse de consigne Vc qui était alors supérieure au quatrième seuil S4 est alors décroissante et inférieure au troisième seuil S3. Le couple de freinage Cf₃ appliqué au véhicule 1 correspond au couple longitudinal C_{L}. On notera que si la vitesse de consigne Vc continue de décroitre jusqu'à être en deçà du premier seuil S1 le véhicule sera alors à l'arrêt.

Durant l'état de déplacement relatif à l'arrêt en cours E_{d4} du véhicule, ce dernier est relancé de sorte à passer lors d'un passage 26 à l'état de déplacement correspondant au démarrage en cours Ed₂. Lors de ce passage 26, les mêmes conditions en vigueur lors du passage 22 doivent alors être vérifiées pour que le véhicule 1 passe à l'état de déplacement correspondant au démarrage en cours Ed₂. Le couple de freinage C_{f4} du véhicule 1 est réduit proportionnellement à l'accélération de ce dernier.

Un tel procédé de régulation automatique de la vitesse du véhicule 1, peut être mis en œuvre par le programme d'ordinateur exécuté par un ordinateur et en particulier par l'unité de traitement 2 à partir de ses ressources matérielles et logicielles.

Cette unité de traitement 2 est apte à exécuter ce programme d'ordinateur qui comprend des instructions de code de programme pour l'exécution des étapes de ce procédé de régulation automatique de la vitesse du véhicule 1.

La présente invention n'est pas limitée au mode de réalisation qui a été explicitement décrit, mais elle en inclut les diverses variantes et généralisations contenues dans le domaine des revendications ci-après.

## Revendications

1. Procédé de régulation automatique d'une vitesse d'un véhicule (1) circulant à basse vitesse en fonction d'une vitesse de consigne (Vc) comprenant une étape de freinage (27) et/ou une étape d'accélération (19) du véhicule (1), **caractérisé en ce que** l'étape de freinage (27) comprend une sous-étape de détermination (15) d'un état de déplacement (E_{d1}, E_{d2}, E_{d3}, E_{d4}) du véhicule (1) à partir de la vitesse de consigne (Vc) et d'une sous-étape de génération (16) d'un couple de freinage (C_{f1}, C_{f2}, C_{f3}, C_{f4}) en fonction de l'état de déplacement (E_{d1}, E_{d2}, E_{d3}, E_{d4}) déterminé du véhicule (1).

2. Procédé selon la revendication précédente, **caractérisé en ce qu'**il comprend une étape de calcul (14) d'un couple longitudinal (C_{L}) à partir de la vitesse de consigne (Vc) et d'une vitesse mesurée (Vm) du véhicule (1).

3. Procédé selon la revendication précédente, **caractérisé en ce que** lorsque le couple longitudinal (C_{L}) calculé est :
- positif alors l'étape d'accélération (19) comprend une sous-étape de génération d'un couple d'accélération correspondant au couple longitudinal (C_{L}) calculé ;
- négatif alors l'étape de freinage (27) comprend la sous-étape de génération du couple de freinage (C_{f1}, C_{f2}, C_{f3}, C_{f4}) en fonction de l'état de déplacement (E_{d1}, E_{d2}, E_{d3}, E_{d4}) déterminé du véhicule (1).

4. Procédé selon l'une quelconque des revendications précédentes, **caractérisé en ce que** l'état de déplacement (E_{d1}, E_{d2}, E_{d3}, E_{d4}) du véhicule (1) est :
- un arrêt (E_{d1}) ;
- un démarrage en cours (E_{d2}) ;
- un roulage de croisière (E_{d3}), et/ou
- un arrêt en cours (E_{d4}).

5. Procédé selon l'une quelconque des revendications précédentes, **caractérisé en ce que** la sous-étape de détermination (15) de l'état de déplacement (E_{d1}, E_{d2}, E_{d3}, E_{d4}) du véhicule (1) comprend une étape d'évaluation de la croissance/décroissance de la vitesse de consigne (Vc) sur une période d.

6. Procédé selon la revendication précédente, **caractérisé en ce que** lorsque la vitesse de consigne (Vc) est croissante et qu'elle est sensiblement supérieure à :
- un deuxième seuil de vitesse (S2) et qu'un couple moteur mesuré (Cm) du véhicule est sensiblement supérieur à un couple moteur seuil (S5), alors l'état de déplacement (E_{d1}, E_{d2}, E_{d3}, E_{d4}) du véhicule (1) correspond à un démarrage en cours (E_{d2}) ;
- un quatrième seuil (S4) de vitesse alors l'état de déplacement (E_{d1}, E_{d2}, E_{d3}, E_{d4}) du véhicule (1) correspond à un roulage de croisière (E_{d3}).

7. Procédé selon l'une quelconque des revendications précédentes, **caractérisé en ce que** lorsqu'une vitesse de consigne (Vc) est décroissante et qu'elle est sensiblement inférieure à :
- un premier seuil (S1) de vitesse alors l'état de déplacement (E_{d1}, E_{d2}, E_{d3}, E_{d4}) du véhicule (1) correspond à un arrêt du véhicule (E_{d1}) ;
- un troisième seuil (S3) de vitesse alors l'état de déplacement (E_{d1}, E_{d2}, E_{d3}, E_{d4}) du véhicule (1) correspond à un arrêt en cours (E_{d4}) du véhicule (1).

8. Programme d'ordinateur comprenant des instructions de code de programme pour l'exécution des étapes du procédé selon les revendications 1 à 7 lorsque ledit programme est exécuté par un ordinateur.

9. Système de régulation automatique d'une vitesse d'un véhicule (1) circulant à basse vitesse, pour la mise en œuvre du procédé selon l'une quelconque des revendications 1 à 7, comprenant :
- une unité de traitement (2) ;
- une première unité de commande électronique (7) apte à gérer un freinage du véhicule ;
- une deuxième unité de commande électronique (3) apte à gérer une accélération du véhicule ; et
- une troisième unité de commande électronique (4) apte à générer au moins une vitesse de consigne (Vc),
ladite unité de traitement (2) étant reliée aux première, deuxième et troisième unités de commande électronique (7, 3, 4) et comprend des éléments de mémoire comportant un programme d'ordinateur selon la revendication précédente exécutable par ladite unité de traitement (2).

10. Véhicule (1) circulant à basse vitesse comprenant un système de régulation automatique d'une vitesse dudit véhicule (1) selon la revendication précédente.

11. Véhicule (1) selon la revendication précédente, **caractérisé en ce qu'**il est apte à se déplacer en mode autonome.

## Patentansprüche

1. Verfahren zum automatischen Regeln einer Geschwindigkeit eines langsam fahrenden Fahrzeugs (1) in Abhängigkeit von einer Sollgeschwindigkeit (Vc), beinhaltend einen Schritt des Abbremsens (27) und/oder einen Schritt des Beschleunigens (19) des Fahrzeugs (1), **dadurch gekennzeichnet, dass** der Schritt des Abbremsens (27) einen Unterschritt des Bestimmens (15) eines Bewegungszustands (E_{d1}, E_{d2}, E_{d3}, E_{d4}) des Fahrzeugs (1) auf Grundlage der Sollgeschwindigkeit (Vc) und einen Unterschritts des Erzeugens (16) eines Bremsmoments (C_{f1}, C_{f2}, C_{f3}, C_{f4}) in Abhängigkeit von dem bestimmten Bewegungszustand (E_{d1}, E_{d2}, E_{d3}, E_{d4}) des Fahrzeugs (1) beinhaltet.

2. Verfahren nach dem vorhergehenden Anspruch, **dadurch gekennzeichnet, dass** es einen Schritt des Berechnens (14) eines Längsmoments (C_{L}) auf Grundlage der Sollgeschwindigkeit (Vc) und einer gemessenen Geschwindigkeit (Vm) des Fahrzeugs (1) beinhaltet.

3. Verfahren nach dem vorhergehenden Anspruch, **dadurch gekennzeichnet, dass**, wenn das berechnete Längsmoment (C_{L}):
- positiv ist, der Schritt des Beschleunigens (19) einen Unterschritt des Erzeugens eines Beschleunigungsmoments entsprechend dem berechneten Längsmoment (C_{L}) beinhaltet;
- negativ ist, der Schritt des Abbremsens (27) den Unterschritt des Erzeugens des Bremsmoments (C_{f1}, C_{f2}, C_{f3}, C_{f4}) in Abhängigkeit von dem bestimmten Bewegungszustand (E_{d1}, E_{d2}, E_{d3}, E_{d4}) des Fahrzeugs (1) beinhaltet.

4. Verfahren nach einem der vorhergehenden Ansprüche, **dadurch gekennzeichnet, dass** der Bewegungszustand (E_{d1}, E_{d2}, E_{d3}, E_{d4}) des Fahrzeugs (1) :
- ein Halt (E_{d1}) ;
- ein Anfahrvorgang (E_{d2});
- ein Fahrtempo (E_{d3}) und/oder
- ein Haltevorgang (E_{d4}) ist.

5. Verfahren nach einem der vorhergehenden Ansprüche, **dadurch gekennzeichnet, dass** der Unterschritt des Bestimmens (15) des Bewegungszustands (E_{d1}, E_{d2}, E_{d3}, E_{d4}) des Fahrzeugs (1) einen Schritt des Beurteilens der Zunahme/Abnahme der Sollgeschwindigkeit (Vc) über einen Zeitraum d beinhaltet.

6. Verfahren nach dem vorhergehenden Anspruch, **dadurch gekennzeichnet, dass**, wenn die Sollgeschwindigkeit (Vc) zunimmt und sie im Wesentlichen höher als:
- ein zweiter Geschwindigkeitsschwellenwert (S2) ist und ein gemessenes Motormoment (Cm) des Fahrzeugs im Wesentlichen höher als ein Motormomentschwellenwert (S5) ist, der Bewegungszustand (E_{d1}, E_{d2}, E_{d3}, E_{d4}) des Fahrzeugs (1) einem Anfahrvorgang (E_{d2}) entspricht;
- ein vierter Geschwindigkeitsschwellenwert (S4) ist, der Bewegungszustand (E_{d1}, E_{d2}, E_{d3}, E_{d4}) des Fahrzeugs (1) einem Fahrtempo (E_{d3}) entspricht.

7. Verfahren nach einem der vorhergehenden Ansprüche, **dadurch gekennzeichnet, dass**, wenn eine Sollgeschwindigkeit (Vc) abnimmt und sie im Wesentlichen niedriger als:
- ein erster Geschwindigkeitsschwellenwert (S1) ist, der Bewegungszustand (E_{d1}, E_{d2}, E_{d3}, E_{d4}) des Fahrzeugs (1) einem Halt (E_{d1}) des Fahrzeugs entspricht;
- ein dritter Geschwindigkeitsschwellenwert (S3) ist, der Bewegungszustand (E_{d1}, E_{d2}, E_{d3}, E_{d4}) des Fahrzeugs (1) einem Haltevorgang (E_{d4}) des Fahrzeugs (1) entspricht.

8. Computerprogramm, das Programmcodeanweisungen zum Ausführen der Schritte des Verfahrens nach den Ansprüchen 1 bis 7 beinhaltet, wenn das Programm von einem Computer ausgeführt wird.

9. System zum automatischen Regeln einer Geschwindigkeit eines langsam fahrenden Fahrzeugs (1) zur Umsetzung des Verfahrens nach einem der Ansprüche 1 bis 7, das Folgendes beinhaltet:
- eine Verarbeitungseinheit (2);
- eine erste elektronische Steuereinheit (7), die fähig ist, ein Abbremsen des Fahrzeugs zu verwalten;
- eine zweite elektronische Steuereinheit (3), die fähig ist, ein Beschleunigen des Fahrzeugs zu verwalten; und
- eine dritte elektronische Steuereinheit (4), die fähig ist, mindestens eine Sollgeschwindigkeit (Vc) zu erzeugen,
wobei die Verarbeitungseinheit (2) mit der ersten, zweiten und dritten elektronischen Steuereinheit (7, 3, 4) verbunden ist und Speicherelemente beinhaltet, die ein Computerprogramm nach dem vorhergehenden Anspruch umfassen, das durch die Verarbeitungseinheit (2) ausführbar ist.

10. Langsam fahrendes Fahrzeug (1), das ein System zum automatischen Regeln einer Geschwindigkeit des Fahrzeugs (1) nach dem vorhergehenden Anspruch beinhaltet.

11. Fahrzeug (1) nach dem vorhergehenden Anspruch, **dadurch gekennzeichnet, dass** es fähig ist, sich autonom zu bewegen.

## Claims

1. Method for automatically regulating the speed of a vehicle (1) travelling at low speed as a function of a reference speed (Vc), comprising a step (27) of braking and/or a step (19) of acceleration of the vehicle (1), **characterized in that** the step (27) of braking comprises a substep (15) of determination of a movement status (E_{d1}, E_{d2}, E_{d3}, E_{d4}) of the vehicle (1) based on the reference speed (Vc) and a substep (16) of generation of a brake torque (C_{f1}, C_{f2}, C_{f3}, C_{f4}) as a function of the determined movement status (E_{d1}, E_{d2}, E_{d3}, E_{d4}) of the vehicle (1) .

2. Method according to the preceding claim, **characterized in that** it comprises a step (14) of calculating a longitudinal torque (C_{L}) based on the reference speed (Vc) and a measured speed (Vm) of the vehicle (1).

3. Method according to the preceding claim, **characterized in that** when the calculated longitudinal torque (C_{L}) is:
- positive, the step (19) of acceleration then comprises a substep of generation of an acceleration torque corresponding to the calculated longitudinal torque (C_{L}) ;
- negative, the step (27) of braking then comprises the substep of generation of the brake torque (C_{f1}, C_{f2}, C_{f3}, C_{f4}) as a function of the determined movement status (E_{d1}, E_{d2}, E_{d3}, E_{d4}) of the vehicle (1) .

4. Method according to any one of the preceding claims, **characterized in that** the movement status (E_{d1}, E_{d2}, E_{d3}, E_{d4}) of the vehicle (1) is:
- a halt (E_{d1}) ;
- current start-up (E_{d2}) ;
- cruising (E_{d3}), and/or
- current halting (E_{d4}) .

5. Method according to any one of the preceding claims, **characterized in that** the substep (15) of determination of the movement status (E_{d1}, E_{d2}, E_{d3}, E_{d4}) of the vehicle (1) comprises a step of evaluation of the increase/decrease in the reference speed (Vc) over a period d.

6. Method according to the preceding claim, **characterized in that** when the reference speed (Vc) is increasing and is substantially in excess of:
- a second speed threshold (S2) and a measured engine torque (Cm) of the vehicle is substantially in excess of a threshold engine torque (S5), the displacement status (E_{d1}, E_{d2}, E_{d3}, E_{d4}) of the vehicle (1) then corresponds to current start-up (E_{d2});
- a fourth speed threshold (S4), the movement status (E_{d1}, E_{d2}, E_{d3}, E_{d4}) of the vehicle (1) then corresponds to cruising (E_{d3}) .

7. Method according to any one of the preceding claims, **characterized in that** when a reference speed (Vc) is decreasing and is substantially below:
- a first speed threshold (S1), the movement status (E_{d1}, E_{d2}, E_{d3}, E_{d4}) of the vehicle (1) then corresponds to a halt (E_{d1}) of the vehicle;
- a third speed threshold (S3), the movement status (E_{d1}, E_{d2}, E_{d3}, E_{d4}) of the vehicle (1) then corresponds to current halting (E_{d4}) of the vehicle (1).

8. Computer programme comprising programme code instructions for the execution of the steps in the method according to Claims 1 to 7 when said programme is executed by a computer.

9. System for automatically regulating the speed of a vehicle (1) travelling at low speed, for implementing the method according to any one of Claims 1 to 7, comprising:
- a processing unit (2);
- a first electronic command unit (7) capable of generating braking of the vehicle;
- a second electronic command unit (3) capable of generating acceleration of the vehicle; and
- a third electronic command unit (4) capable of generating at least one reference speed (Vc),
said processing unit (2) being connected to the first, second and third electronic command units (7, 3, 4) and comprising memory elements comprising a computer programme according to the preceding claim that can be executed by said processing unit (2).

10. Vehicle (1) travelling at low speed, comprising a system for automatically regulating the speed of said vehicle (1) according to the preceding claim.

11. Vehicle (1) according to the preceding claim, **characterized in that** it is capable of moving autonomously.
